# DEMANDE DE BREVET EUROPEEN

(11) **EP 4 471 644 A1**
(43) Date de publication de la demande: **04.12.2024**
(21) Numéro de dépôt: 24176821.7
(22) Date de dépôt: 20.05.2024
(51) Int. Cl.: G06F 21/76

(54) **PROCÉDÉ DE GESTION DU CYCLE DE VIE D'UN SYSTÈME SUR PUCE, ET SYSTÈME SUR PUCE CORRESPONDANT**

(30) Priorité: 31.05.2023 FR 2305441
(71) Demandeur: STMicroelectronics International N.V., 1228 Plan-les-Ouates, Geneva (CH)
(72) Inventeur: PALLARDY Loic, 72700 ROUILLON (FR); MERE, Maxime, 72100 LE MANS (FR); JOUAULT, Frédéric, 49800 TRELAZE (FR)
(74) Mandataire: Casalonga

(57) **Abrégé**

Le procédé de gestion du cycle de vie (LCMS) d'un système sur puce (SOC) ayant des fonctionnalités (IPS), comprenant une gestion de la propriété à plusieurs acteurs (MUOS) répertoriant des propriétaires des fonctionnalités dans un répertoire, et comprenant une allocation des droits d'une fonctionnalité (IPS) au cours du cycle de vie du système sur puce, en fonction d'une commande de configuration (CmdConfig) comportant une identification de ladite fonctionnalité, une identification d'un droit de propriété ou d'accès de la fonctionnalité, et une signature du propriétaire de cette fonctionnalité (SignST>, SignUser>).

## Description

Des modes de réalisation et de mise en oeuvre concernent la gestion du cycle de vie d'un système sur puce, en particulier la gestion de fonctionnalités du système sur puce au cours de la durée de vie du produit (le produit étant par exemple le système sur puce ou un objet incorporant le système sur puce).

Il existe une demande de bénéficier de services activables dynamiquement au cours de la durée de vie du produit tels que dans le cadre d'une location pour les utilisateurs finaux, dans le cadre d'une garantie de la sécurité dans l'usage des fonctionnalités, dans le cadre d'une traçabilité des usages, dans le cadre d'une simplification de la procédure de configuration initiale du fabricant d'origine du produit, et/ou encore dans le cadre d'un recyclage actif des systèmes sur puce.

Les solutions classiques ne sont typiquement pas adaptées à ces besoins, car elles ne permettent pas en particulier une configuration dynamique des ayants droit au cours de la durée de vie du produit, tout en assurant la sécurité contre le piratage ou des accès indus.

En effet, classiquement, des fonctionnalités des systèmes sur puce peuvent être activées ou non par une configuration en fin de chaine de production, typiquement au moyen d'une écriture dans une mémoire à programmation unique, c'est-à-dire une mémoire non-volatile ne pouvant être écrite qu'une seule fois par le fabricant du circuit.

D'autres systèmes classiques peuvent prévoir une activation ou désactivation de fonctionnalités au cours de la vie d'un produit, mais nécessitant une action provenant d'une autorité de confiance externe au système, tel que par exemple dans un fonctionnement client-serveur fournissant des fonctionnalités en ligne supplémentaires au système (client) par l'autorité de confiance externe (serveur).

Ainsi, il existe un besoin de proposer des systèmes sur puce capables d'activer et de désactiver des fonctionnalités dynamiquement au cours du cycle de vie du produit, par exemple en fonction du propriétaire du produit, sans action d'une autorité de confiance externe et centralisée, et avantageusement de manière réversible sans limite dans le temps. En outre, il est souhaitable que la sécurité du processus d'activation/désactivation dynamique soit garantie et tende à l'inviolabilité.

Les modes de mise en oeuvre et de réalisation définis ci-après, sont proposés à ces égards, et permettent à un système sur puce de bénéficier d'une gestion dynamique d'activation ou désactivation des fonctionnalités (par exemple par une gestion des droits d'accès à ces fonctionnalités) pendant tout le cycle de vie du système sur puce, et pas seulement pendant la production du circuit intégré.

Ainsi, lesdits modes de mise en oeuvre et de réalisation définis ci-après, en permettant des configurations et reconfigurations dynamiques du système sur puce, peuvent offrir : une amélioration de la traçabilité des puces ; une mise en oeuvre de location adaptative (« smart renting » en anglais) ; un moyen de se prémunir contre la surproduction et la contrefaçon ; une mise à disposition (ou « un provisionnement » selon un anglicisme usité) sécurisée de « nouvelles » fonctionnalités à un produit ; une possibilité de multipropriété ; une possibilité de transfert de propriété et de licences des fonctionnalités ; un moyen de prouver la propriété du système.

Selon un aspect, il est proposé un procédé de gestion du cycle de vie d'un système sur puce ayant des fonctionnalités, comprenant une gestion de la propriété à plusieurs acteurs répertoriant des propriétaires des fonctionnalités dans un répertoire, et comprenant une allocation des droits d'une fonctionnalité au cours du cycle de vie du système sur puce, en fonction d'une commande de configuration comportant une identification de ladite fonctionnalité, une identification d'un droit de propriété ou d'accès de la fonctionnalité, et une signature du propriétaire de cette fonctionnalité.

Selon un mode de mise en oeuvre, ledit répertoire est contenu dans un script de programmation enregistré dans une mémoire sécurisée, et ladite commande de configuration est communiquée dans une version modifiée dudit script, le procédé comprenant une exécution du script afin d'effectuer ladite allocation des droits de la fonctionnalité identifiée.

Selon un mode de mise en oeuvre, ledit répertoire est contenu dans une mémoire à programmation unique, et ladite commande de configuration est communiquée dans un certificat comportant une chaine de données et enregistré dans une mémoire sécurisée, le procédé comprenant une interprétation du certificat afin d'effectuer ladite allocation des droits de la fonctionnalité identifiée.

Par « certificat », on entend une chaîne de données certifiées, par exemple une chaine de données signée dont la clé publique est contenue dans ledit répertoire ; ou par exemple une chaine de données signée dont la clé publique est contenue dans un document d'authentification signé joint à la chaine de donnée, et dont la clé publique (du document d'authentification) est contenue dans ledit répertoire. Un tel document d'authentification peut par exemple être régi par la norme X.509 (ledit document d'authentification étant distinctement nommé certificat dans la norme X.509).

Enfin, par « certificat » on entendra aussi tout autre moyen équivalent fournissant un mécanisme de validation (ou certification) de la chaîne de données, tel que par exemple une validation au sein d'un système du type blockchain (terme anglais usité n'ayant pas d'équivalent utilisé en langue française, signifiant littéralement « chaîne de blocs »).

Selon un mode de mise en oeuvre, si ladite commande de configuration comporte l'identification d'un droit d'accès, alors la gestion de la propriété comprend une allocation d'autorisations d'accès à la fonctionnalité identifiée.

Selon un mode de mise en oeuvre, si ladite commande de configuration comporte l'identification du droit de propriété de ladite fonctionnalité à un acteur identifié, alors la gestion de la propriété comprend une allocation à l'acteur identifié de la propriété de la fonctionnalité identifiée.

Selon un mode de mise en oeuvre, ladite gestion de la propriété comprend une vérification que ladite signature de la commande de configuration authentifie le dernier propriétaire connu dans ledit répertoire pour la fonctionnalité identifiée.

Par exemple, ladite gestion de la propriété comprend un déchiffrement de ladite signature de la commande de configuration avec une clé de chiffrement dudit dernier propriétaire connu.

Selon un mode de mise en oeuvre, le système sur puce comporte en outre un système autorisant et interdisant les accès aux fonctionnalités, en fonction du contenu d'un registre de configuration, ladite gestion de la propriété comprenant une programmation du registre de configuration pour allouer lesdits droits de la fonctionnalité.

Par exemple le système capable d'autoriser et d'interdire des accès aux fonctionnalités peut être implémenté dans un système de gestions des droits d'accès du système sur puce, tel que l'environnement d'isolation des ressources décrit dans la publication FR 3103586 A1 (28/05/2021) permettant notamment une gestion dynamique des droits d'accès.

Selon un mode de mise en oeuvre, le procédé peut comprendre un enregistrement irréversible d'un contenu du registre de configuration, c'est-à-dire au moins une partie du contenu du registre de configuration, si ladite commande de configuration définit en outre un caractère irréversible de ladite allocation.

Selon un mode de mise en oeuvre, ladite allocation des droits des fonctionnalités est effectuée au démarrage du système sur puce, en coopération avec ledit système autorisant et interdisant les accès aux fonctionnalités, de sorte que tous les accès sont interdits avant ladite allocation.

Selon un mode de mise en oeuvre, le procédé comporte en outre une génération toujours active d'un horodatage, dans lequel ladite gestion de la propriété comprend une programmation à un instant futur, déterminé par ledit horodatage, de ladite allocation audit acteur de la fonctionnalité.

Par « génération toujours active d'un horodatage », on entend une génération autonome d'une information temporelle d'un ordre de grandeur de date et heure, dans le système sur puce ; par exemple généré au moyen d'un circuit d'horloge toujours actif, aussi appelé système de chronométrage sécurisé (usuellement « secure timing system » ou « secure system time » ou « secure RTC » pour « secure real time clock » en anglais).

Selon un autre aspect, il est également proposé un système sur puce, ayant des fonctionnalités, et comprenant un dispositif de gestion du cycle de vie incorporant un circuit de gestion de la propriété à plusieurs acteurs configuré pour répertorier des propriétaires des fonctionnalités dans un répertoire, et pour allouer des droits d'une fonctionnalité au cours du cycle de vie du système sur puce, en fonction d'une commande de configuration comportant une identification de ladite fonctionnalité, une identification d'un droit de propriété ou d'accès de la fonctionnalité, et une signature du propriétaire de cette fonctionnalité.

Selon un mode de réalisation, ledit répertoire est contenu dans un script de programmation enregistré dans une mémoire sécurisée, et ladite commande de configuration est communiquée dans une version modifiée dudit script, ledit circuit de gestion de la propriété comportant une unité de contrôle configurée pour exécuter ledit script afin d'effectuer ladite allocation des droits de la fonctionnalité identifiée.

Selon un mode de réalisation, ledit répertoire est contenu dans une mémoire à programmation unique, et ladite commande de configuration est communiquée dans un certificat comportant une chaine de données et enregistré dans une mémoire sécurisée, ledit circuit de gestion de la propriété comportant une unité de contrôle configurée pour interpréter ledit certificat afin d'effectuer ladite allocation des droits de la fonctionnalité identifiée.

Selon un mode de réalisation, le circuit de gestion de la propriété est configuré pour allouer des autorisations d'accès à la fonctionnalité identifiée, si ladite commande de configuration comporte l'identification d'un droit d'accès.

Selon un mode de réalisation, le circuit de gestion de la propriété est configuré pour allouer à l'acteur identifié la propriété de la fonctionnalité identifiée, si ladite commande de configuration comporte l'identification du droit de propriété de ladite fonctionnalité à un acteur identifié.

Selon un mode de réalisation, ledit circuit de gestion de la propriété comporte une unité d'authentification configurée pour vérifier que ladite signature de la commande de configuration authentifie le dernier propriétaire connu dans ledit répertoire pour la fonctionnalité identifiée.

Selon un mode de réalisation, le système sur puce comporte en outre un système configuré pour autoriser et interdire des accès aux fonctionnalités du système sur puce, en fonction du contenu d'un registre de configuration, ledit circuit de gestion de la propriété étant configuré pour programmer le registre de configuration afin d'allouer lesdits droits de la fonctionnalité.

Selon un mode de réalisation, ledit registre de configuration est capable d'enregistrer un contenu de manière irréversible, si ladite commande de configuration définit en outre un caractère irréversible de l'allocation.

Selon un mode de réalisation, le circuit de gestion de la propriété est configuré pour effectuer ladite allocation des droits des fonctionnalités au démarrage du système sur puce, en coopération avec ledit système configuré pour autoriser et interdire des accès aux fonctionnalités du système sur puce de sorte que tous les accès sont interdits avant ladite allocation.

Selon un mode de réalisation, le système sur puce comporte en outre un circuit sécurisé d'horodatage toujours actif, dans lequel ledit circuit de gestion de la propriété est configuré pour programmer à un instant futur, déterminé par ledit circuit d'horodatage, ladite allocation des droits de ladite fonctionnalité.

D'autres avantages et caractéristiques de l'invention apparaîtront à l'examen de la description détaillée de modes de réalisation et de mise en oeuvre, nullement limitatifs, et des dessins annexés sur lesquels les figures :
[Fig.1] ;
[Fig.2] ;
[Fig.3] ;
[Fig.4] ;
[Fig.5] ;
[Fig.6] ;
[Fig.7] ;
[Fig.8] ;
[Fig.9] ;
[Fig. 10] ;
[Fig.11] ;
[Fig.12] ;
[Fig. 13] ;

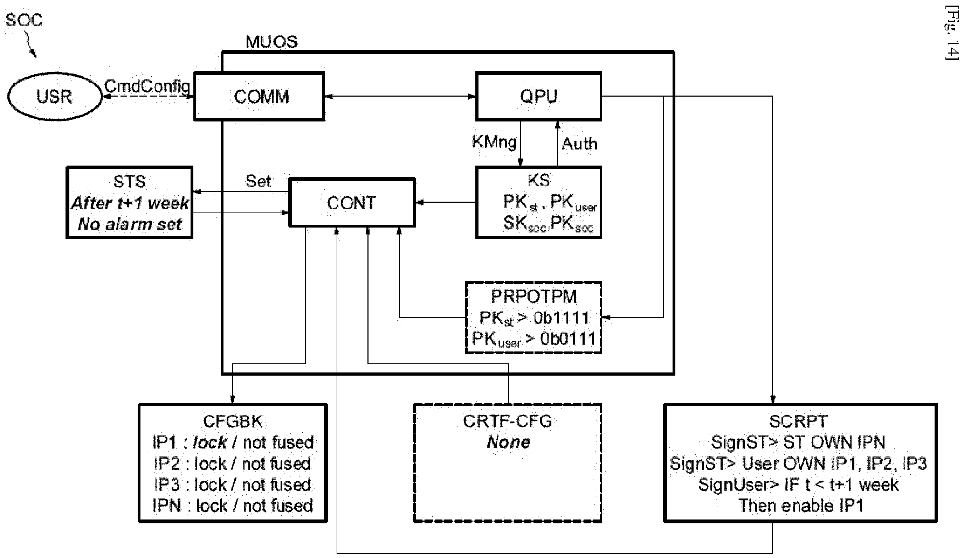

[Fig.14] illustrent des modes de réalisation et de mise en oeuvre de l'invention.

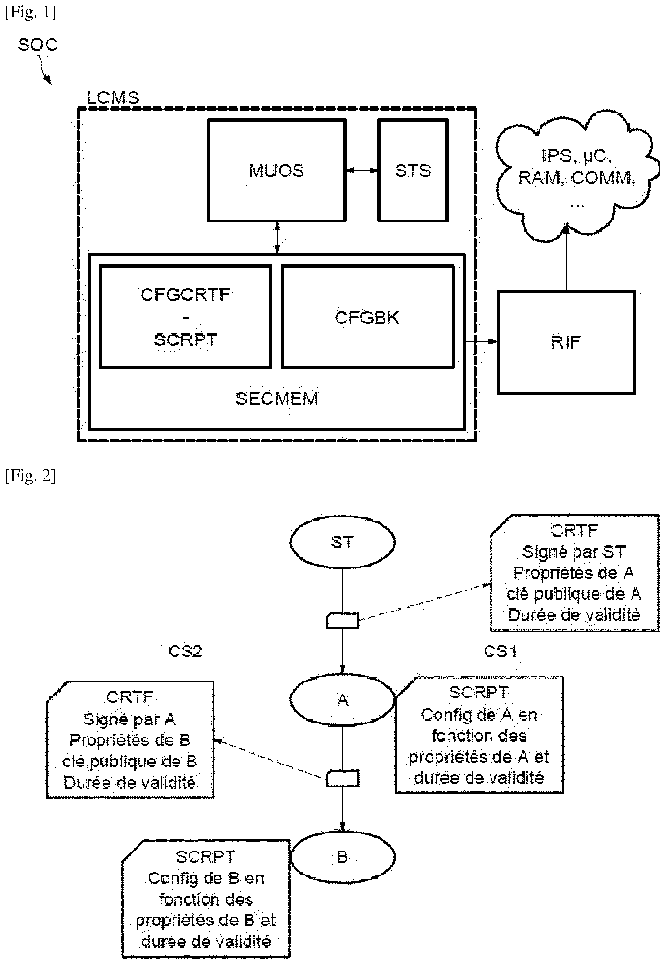

La figure 1 illustre un exemple de réalisation d'un système sur puce SOC, ayant des fonctionnalités, et comprenant un dispositif de gestion du cycle de vie LCMS capable d'activer ou désactiver des fonctionnalités dynamiquement pendant toute la durée de vie du système sur puce SOC.

La durée de vie du système sur puce, qui peut également être appelé le cycle de vie, commence en fin de chaine de production, lorsque le circuit intégré est fonctionnel et apte à être paramétré par le fabricant pour une commercialisation donnée, puis comporte la commercialisation et l'usage du système sur puce, jusqu'à ce que le produit soit un déchet, potentiellement recyclé.

Les fonctionnalités du système sur puce SOC peuvent être mises en oeuvre par des ressources IPS spécifiquement dédiées, telles que par exemple un capteur d'image et un accélérateur matériel de traitement d'image ou de traitement neuronal, et/ou par des ressources communes telles qu'un microcontrôleur µC ; de la mémoire vive RAM, des interfaces de communications COMM telles que le « WiFi » (normes du groupe IEEE 802.11), la « 4G/5G/LTE » (normes de l'UIT et le 3GPP), l'« USB », l'« I2C », la « SPI », etc ; ainsi que d'autres ressources matérielles ou logicielles.

On désignera de manière générale toute fonctionnalité pouvant être identifiée distinctement par la référence « IPS », indifféremment du moyen qui permet de l'obtenir.

Ainsi, et comme il apparaîtra dans la description ci-après, la capacité à activer ou désactiver dynamiquement des fonctionnalités IPS est avantageuse dès cette première étape du cycle de vie du système sur puce SOC, en permettant une diversification des paramétrages possibles d'une même production du circuit intégré du système SOC, par exemple selon différentes gammes commerciales ; tout en facilitant la procédure de paramétrage par le fabricant et la gestion de son stock.

Au cours de la durée de vie du système, c'est-à-dire lors de sa commercialisation et de son utilisation, la capacité à activer ou désactiver dynamiquement des fonctionnalités IPS peut permettre au fabricant ou au possesseur du système sur puce SOC de par exemple mettre en oeuvre une location adaptative (« smart renting » en anglais) de certaines fonctionnalités, ou bien une mise à disposition de « nouvelles » fonctionnalités à un produit, telle que dans le cadre d'une mise à jour.

La capacité à activer ou désactiver dynamiquement des fonctionnalités permet par ailleurs une meilleure gestion de propriétaires du système sur puce SOC, offrant notamment des possibilités de multipropriété des fonctionnalités et de transfert de propriété des fonctionnalités, et des moyens de preuve de la propriété.

En outre, à la fin du cycle de vie d'un produit, le système sur puce SOC peut être recyclé activement, c'est-à-dire par exemple être réutilisé avec une reconfiguration adaptée à la seconde application, là-encore grâce à la capacité à activer ou désactiver dynamiquement des fonctionnalités.

Le système sur puce SOC comporte avantageusement un système d'isolation des ressources RIF capable d'autoriser et d'interdire des accès aux fonctionnalités IPS du système sur puce SOC. Par exemple le système d'isolation des ressources RIF s'inscrit dans un système de gestion des accès aux ressources tel que décrit dans la publication FR 3103586 A1 (28/05/2021), qui est notamment apte à des configurations dynamiques selon les applications du système sur puce.

Par exemple, le système d'isolation des ressources RIF peut être capable de lire le contenu d'un ou plusieurs registre(s) de configuration CFGBK afin de configurer en accord l'autorisation ou l'interdiction d'accès à une ressource donnée par un dispositif demandeur donné.

Le ou les registre(s) de configuration CFGBK peut(peuvent) par exemple appartenir au système d'isolation des ressources RIF, auquel cas le dispositif de gestion du cycle de vie LCMS peut être capable d'écrire la configuration dans le ou les registre(s) de configuration CFGBK.

Le ou les registre(s) de configuration CFGBK peut(peuvent) par exemple appartenir au dispositif de gestion du cycle de vie LCMS, et être contenu dans une mémoire sécurisée SECMEM.

Le dispositif de gestion du cycle de vie LCMS comporte en effet avantageusement une mémoire sécurisée SECMEM, pouvant contenir le registre de configuration CFGBK mentionné ci-avant, ainsi que des instructions de commandes de configuration CRTF-CFG / SCRPT permettant d'effectuer une modification dynamique, au cours de la durée de vie du système sur puce, des autorisations d'accès aux fonctionnalités IPS.

A cet égard, le dispositif de gestion du cycle de vie LCMS comporte un circuit de gestion de la propriété à plusieurs acteurs MUOS, configuré d'une part pour répertorier des propriétaires pour au moins certaines desdites fonctionnalités IPS dans un répertoire ; et d'autre part pour allouer dynamiquement des droits une fonctionnalité IPS au cours de la durée de vie du système sur puce SOC, en fonction d'une commande de configuration, par exemple via les interfaces de communication COMM.

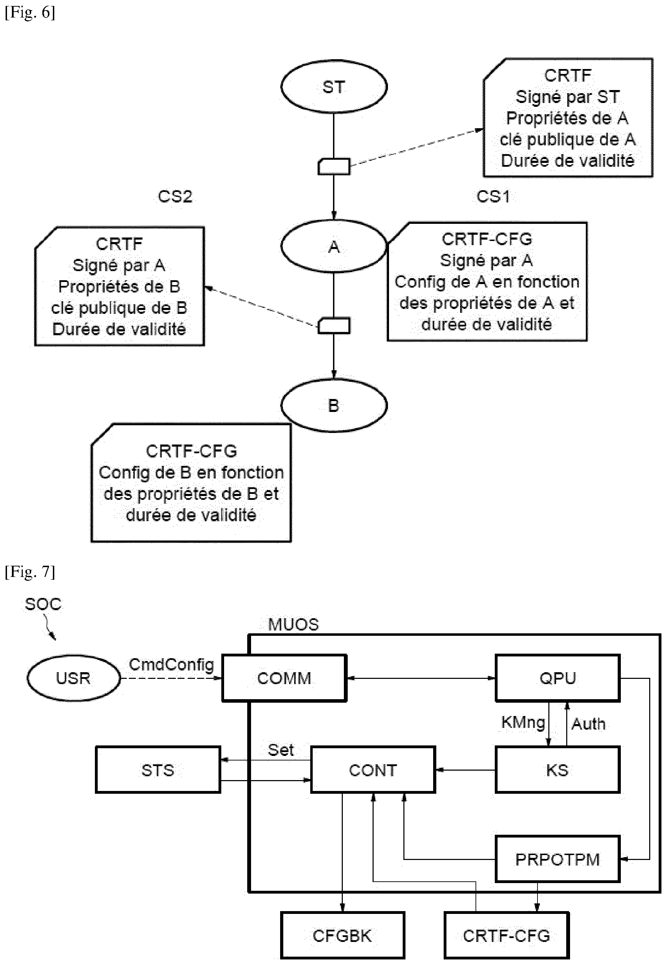

La commande de configuration peut comporter au moins une identification de ladite fonctionnalité IPS, une identification dudit acteur, et une signature du propriétaire de cette fonctionnalité, et peut être communiquée selon les modes de réalisations décrits ci-après en relation avec les figures 2 à 5 et avec les figures 6 à 9.

Avantageusement en matière de sécurité des opérations, le circuit de gestion de la propriété MUOS est configuré pour effectuer les allocations des droits des fonctionnalités à chaque démarrage du système sur puce SOC, et en coopération avec le système d'isolation des ressources RIF de sorte que tous les accès sont interdits avant ladite allocation.

En outre, le dispositif de gestion du cycle de vie LCMS peut comporter un circuit sécurisé d'horodatage toujours actif STS, de sorte que le circuit de gestion de la propriété MUOS peut programmer ses allocations dynamiques des droits des fonctionnalités, à un instant futur, déterminé par ledit circuit d'horodatage STS.

En effet, le circuit sécurisé d'horodatage toujours actif STS, est avantageusement apte à générer de manière autonome une information temporelle d'un ordre de grandeur de date et heure, dans le système sur puce, et est par exemple usuellement appelé « secure timing system » ou « secure system time » ou « secure RTC » en anglais.

On se réfère désormais aux figure 2 à 5, illustrant un premier mode de réalisation et de mise en oeuvre relatif à ladite commande de configuration.

La figure 2 illustre le premier mode de mise en oeuvre pour le procédé de gestion du cycle de vie dans lequel les commande de configuration sont communiquées sous la forme d'un script SCRPT, c'est-à-dire un langage de programmation compréhensible par l'Homme.

Cela est avantageux du point de vue des utilisateurs finaux, pouvant aisément configurer des scripts selon leurs besoins.

D'une part, dans la gestion du cycle de vie, des propriétaires des différentes fonctionnalités sont répertoriés dans le cadre d'une gestion de la propriété à plusieurs acteurs.

Ainsi, à l'issue de la fabrication du système sur puce SOC, le fabricant ST est le propriétaire de toutes les fonctionnalités et a tous les droits sur toutes les fonctionnalités.

Le fabricant ST pourra donc par exemple prévoir que toutes les fonctionnalités ne sont pas activées, par défaut. L'activation pourra être faite ultérieurement pour des raisons commerciales, en fonction par exemple de la gamme offerte ou du type de l'offre.

Le fabricant ST peut ainsi fournir à un acteur A (par exemple un acheteur) des informations CRTF permettant de transférer la propriété d'au moins une fonctionnalité IPS à l'acteur A.

Les informations CRTF sont signées par le fabricant, et comportent une identification de cette ou ces fonctionnalité(s) IPS, une identification dudit acteur A, par exemple par une communication d'une clé publique de l'acteur A, ainsi qu'optionnellement une durée de validité de cette allocation.

L'acteur A pourra ensuite générer une commande de configuration SCRPT sur la base des informations communiquées par l'ancien propriétaire cédant.

La commande de configuration SCRPT comporte une identification d'un droit de propriété ou d'accès de la fonctionnalité.

Si la commande de configuration comporte l'identification d'un droit d'accès, alors la gestion de la propriété comprend une allocation d'autorisations d'accès à la fonctionnalité identifiée.

L'acteur A peut ainsi configurer le système sur puce SOC en choisissant une activation ou une désactivation des fonctionnalités dont il a la propriété. L'acteur A pourra ensuite fournir le système sur puce SOC dans cette configuration à un autre acteur B. L'acteur B, sans avoir la connaissance de la clé du propriétaire A et/ou du fabricant ST, ne pourra pas générer d'autre commande de configuration et ne pourra pas modifier l'allocation des droits des fonctionnalités établie par l'acteur A.

La commande de configuration généré par l'acteur A peut comporter l'identification du droit de propriété de ladite fonctionnalité à un acteur B, identifié dans ladite commande, alors la gestion de la propriété comprend une allocation de la propriété à l'acteur identifié B, c'est-à-dire un transfert de la propriété de l'acteur A à l'acteur B.

A cet égard, l'acteur A peut également fournir à l'acteur B les informations CRTF permettant de transférer la propriété d'au moins une fonctionnalité ISP de l'acteur A à l'acteur B.

Là-aussi, les informations CRTF sont signées par l'acteur A, et comportent une identification de ladite au moins une fonctionnalité IPS, une identification dudit acteur B, par exemple par une communication d'une clé publique de l'acteur B, ainsi qu'optionnellement une durée de validité de cette allocation.

En résumé, dans le premier mode de mise en oeuvre, ledit répertoire est contenu dans un script de programmation SCRPT par exemple enregistré dans la mémoire sécurisée SECMEM. La commande de configuration est communiquée dans une version modifiée dudit script SCRPT, par l'acteur A, B ayant la connaissance desdites informations CRTF du transfert de propriété. La commande de configuration comporte en particulier la clé publique du nouveau propriétaire A (resp. B) et est signée par l'ancien propriétaire ST (resp. A).

Une interprétation du script est mise en oeuvre dans le cadre de la gestion de la propriété, par exemple par une unité de contrôle CONT du circuit de gestion MUOS, afin d'exécuter en pratique ladite allocation à l'acteur identifié de la fonctionnalité identifiée.

A noter que si l'exemple ci-dessus prévoit le transfert d'une fonctionnalité vers un seul acteur (A ou B), il est également possible de transférer une fonctionnalité vers plusieurs acteurs, créant ainsi une multipropriété d'une même fonctionnalité.

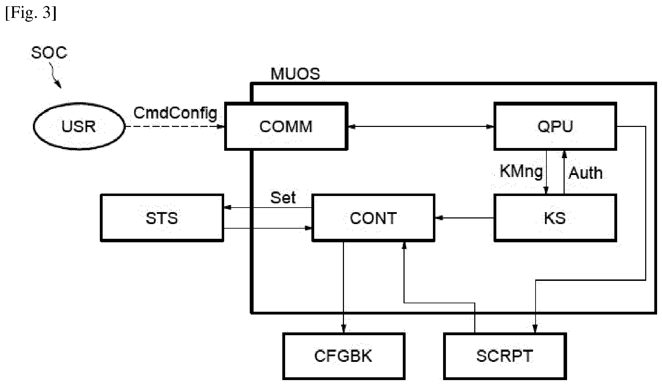

La figure 3 illustre un exemple du premier mode de réalisation du circuit de gestion de la propriété MUOS, correspondant, c'est-à-dire notamment apte à traiter des commandes de configuration communiquées sous la forme d'un script (langage de programmation compréhensible par l'Homme).

Le circuit de gestion de la propriété MUOS est apte à recevoir la commande de configuration CmdConfig d'un utilisateur USR, par exemple par le biais d'une interface de communication COMM présente dans le système sur puce SOC.

Les commandes de configurations CmdConfig sont traitées par une unité d'authentification QPU, notamment capable de gérer et de stocker des clés de chiffrement KMng dans un registre KS, et d'authentifier Auth la signature de la commande de configuration CmdConfig.

L'unité d'authentification QPU est par exemple configurée pour authentifier la provenance de la commande de configuration CmdConfig en vérifiant que la signature de la commande de configuration CmdConfig correspond à une clé publique, stockée dans le registre KS, du dernier propriétaire connu pour la fonctionnalité identifiée, c'est-à-dire le propriétaire répertorié dans ledit répertoire au moment de la réception de la commande CmdConfig.

La vérification de la signature peut se faire par des méthodes classiques de chiffrement symétrique ou asymétrique, possiblement combinées avec une fonction de hachage de la commande.

La signature de la commande de configuration CmdConfig peut être vérifiée et authentifiée en obtenant une empreinte issue du hachage du script, en déchiffrant avec la clé publique dudit dernier propriétaire connu, l'empreinte chiffrée du script.

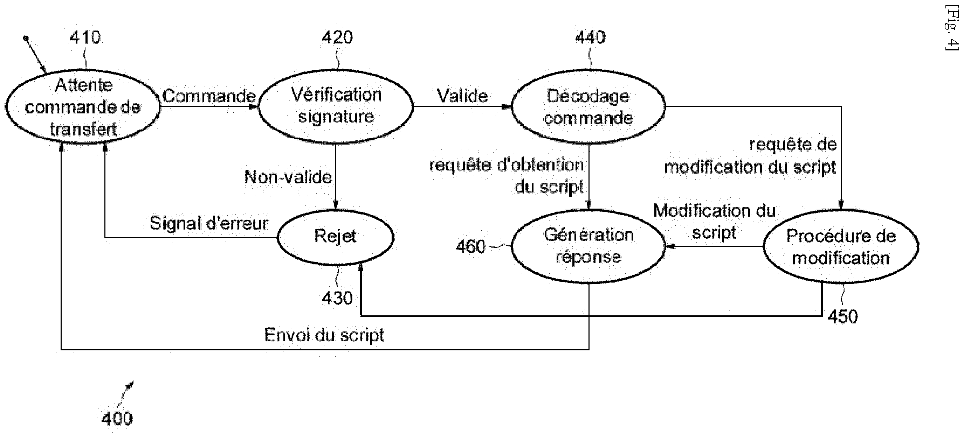

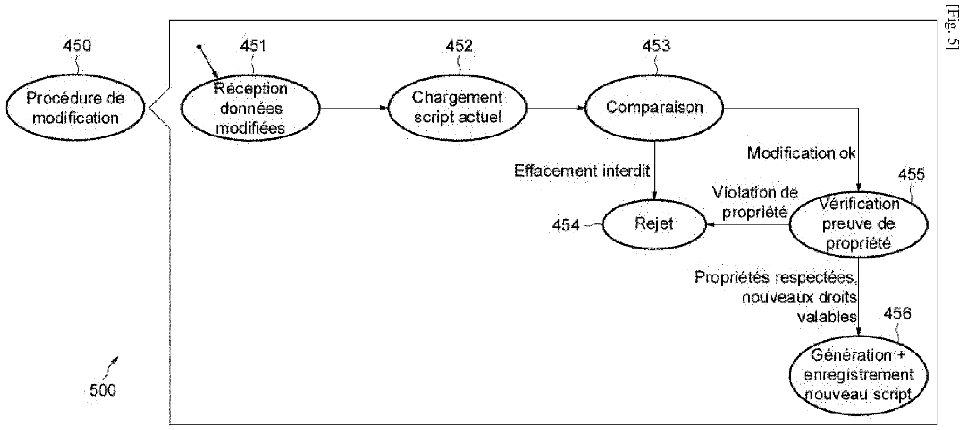

Si la commande de configuration CmdConfig est authentifiée, alors le script reçu SCRPT est enregistré en clair dans la mémoire sécurisée SECMEM ; sinon, la commande est rejetée. On se référera à cet égard aux figures 4 et 5 décrites ci-après.

En outre, le circuit de gestion de la propriété MUOS est par exemple configuré pour programmer le registre de configuration CFGBK, par exemple dans une section de la mémoire sécurisée SECMEM, afin de communique la configuration de l'allocation des droits des fonctionnalités.

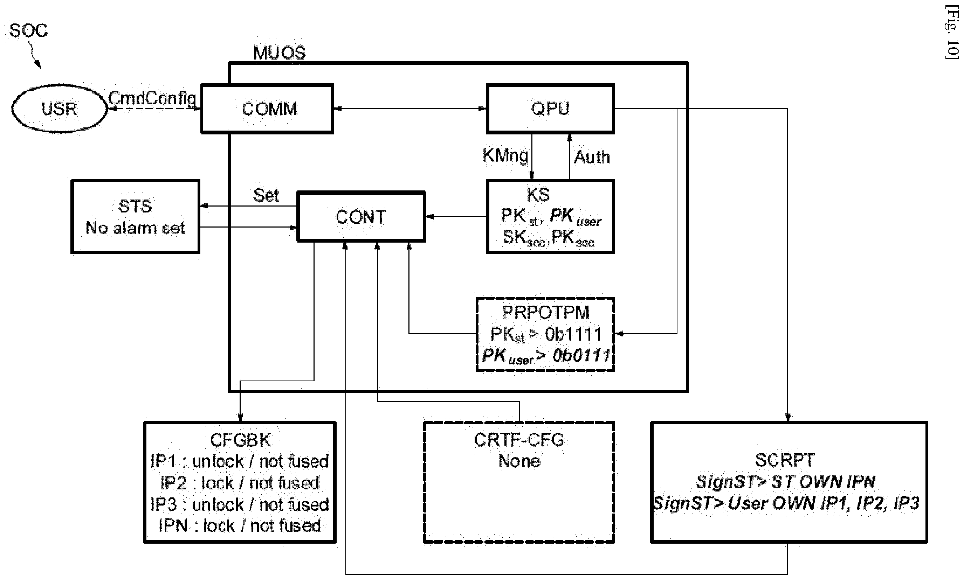

Optionnellement, le registre de configuration CFGBK peut être capable d'enregistrer un contenu de manière irréversible, par exemple par un mécanisme du type fusible FUS (voir figures 10-14), si ladite commande de configuration CmdConfig définit en outre un caractère irréversible de l'allocation.

La figure 4 illustre un procédé 400 de la mise en oeuvre de la vérification par l'unité d'authentification QPU.

Dans un état initial 410, l'unité QPU est dans un état d'attente de commande de configuration.

Lorsqu'une commande de configuration est reçue, alors une vérification de la signature qu'elle contient est faite dans une étape 420.

Par exemple, la commande de configuration est communiquée dans un message comportant une empreinte du contenu de la commande, chiffrée par un mécanisme de hachage, et comportant la signature de la commande chiffrée par une clé privée de l'émetteur. La vérification de la signature peut typiquement comporter un déchiffrement de la signature avec une clé publique associée à l'émetteur, de sorte que l'authentification du message est faite lorsque la signature déchiffrée est identique à l'empreinte, on dira alors que la signature est « valide ».

Si la signature n'est pas valide, alors la commande de configuration est ignorée et rejetée 430, et l'unité QPU revient à l'état d'attente 410. Un message d'erreur peut être généré. Une inscription du rejet peut être enregistrée dans un historique (usuellement « log » en anglais).

Par exemple, la signature n'est pas valide si le message communiquant la commande de configuration n'est pas signé par le propriétaire de la fonctionnalité identifiée. La commande sera également rejetée dans une étape 454 (figure 5) si un acteur commande une modification d'une partie du script dont il ne possède pas les droits appropriés.

Si la signature est valide, alors l'empreinte du contenu de la commande de configuration est décodée dans une étape 440, par exemple d'abord déchiffrée par le mécanisme de hachage correspondant, de manière à obtenir la commande « en clair », puis interprétée, c'est-à-dire décodée et exécutée selon le langage du script prévu.

Si la commande requiert une modification du script, alors les modifications sont faites dans le script dans une procédure de modification du script 450, notamment apte à tenir compte et respecter les droits des différents acteurs.

On se réfère à cet égard à la figure 5.

La figure 5 illustre un exemple de procédé 500 pour mettre en oeuvre la procédure de modification du script 450.

La procédure de modification du script 450 comporte une comparaison 453 entre les données modifiées reçues 451 et le script actuel (avant modification) 452, chargé depuis la mémoire SECMEM.

Dans un premier temps, si les différences identifiées dans la comparaison 453 comportent un effacement interdit d'au moins une ligne de script, alors la commande de modification est rejetée 454.

Dans un second temps, les preuves de propriétés des fonctionnalités IPS dont les droits sont modifiés sont vérifiées dans une étape 455. Par exemple, on peut à cet égard vérifier qu'un transfert de propriété d'une fonctionnalité IPS est signé par l'ancien propriétaire et inclut une clé publique du nouveau propriétaire. Par exemple, on peut vérifier qu'un transfert de droit d'usage d'une fonctionnalité IPS est modifié par le propriétaire de la fonctionnalité IPS.

L'identification de la fonctionnalité IPS peut être fait par un identifiant interne du système sur puce SOC, du type adresse d'un périphérique ou identifiant de compartimentation « CID » (voir la publication susmentionnée).

En cas de violation de propriété, la commande de modification est rejetée 454.

Si les propriétés sont respectées et les nouveaux droits valables, alors un nouveau script est généré et est enregistré dans la mémoire SECMEM, lors d'une étape 456. On notera que le nouveau script ne remplace pas nécessairement l'ancien script, ce qui peut permettre de bénéficier d'un historique des modifications.

On se réfère de nouveau à la figure 4.

A l'issue de la procédure de modification du script 450, une réponse peut être générée dans une étape 460, avant de revenir à l'état d'attente d'une prochaine commande 410.

Si la commande comporte une requête de modification du script, alors, en cas de succès, le nouveau script modifié est envoyé en réponse 460 à l'émetteur.

Si la commande comporte une requête d'obtention du ou des script(s), alors le script actuel est envoyé en réponse 460, ainsi qu'éventuellement un ou plusieurs scripts antérieurs avant modifications.

On se réfère désormais aux figures 6 à 9, illustrant un deuxième mode de réalisation et de mise en oeuvre pour communiquer la commande de configuration.

La figure 6 illustre le deuxième mode de mise en oeuvre pour le procédé de gestion du cycle de vie dans lequel les commandes de configuration sont communiquées sous la forme de certificats CRTF, CRTF-CFG, c'est-à-dire des commandes codées dans une chaine de données ayant une structure préétablie, possiblement d'une manière compréhensible par l'Homme.

Comme dans le premier mode de mise en oeuvre décrit ci-avant en relation avec la figure 2, les commandes de configuration CRTF, CRTF-CFG peuvent comporter une identification d'un droit d'accès, de manière à allouer des autorisations d'accès à la fonctionnalité identifiée, ou une identification d'un droit de propriété, de manière à allouer la fonctionnalité identifiée à un nouveau propriétaire.

A cet égard, l'acteur A peut également fournir à l'acteur B le certificat CRTF permettant de transférer la propriété d'au moins une fonctionnalité IPS de l'acteur A à l'acteur B, de sorte que le nouveau propriétaire B soit l'émetteur de la commande CRTF, sans que l'acteur A n'ait besoin de communiquer avec le système sur puce.

Là-aussi, les informations CRTF sont signées par l'acteur A, et comportent une identification de ladite au moins une fonctionnalité IPS, une identification dudit acteur B, par exemple par une communication d'une clé publique de l'acteur B, ainsi qu'optionnellement une durée de validité de cette allocation.

En pratique, dans le deuxième mode de mise en oeuvre, le répertoire des propriétaires est par exemple contenu dans une mémoire à programmation unique PRPOTPM (figure 7), c'est-à-dire par exemple une mémoire dans laquelle il est possible d'ajouter du contenu, mais il est impossible de modifier l'existant. La commande de configuration est communiquée dans un certificat CRTF comportant une chaine de données du type « mot de commande », et le certificat CRTF peut être enregistré dans la mémoire sécurisée SECMEM. La gestion de la propriété comprend une interprétation du certificat CRTF, par exemple par une unité de contrôle CONT, afin d'exécuter ladite allocation des droits de la fonctionnalité identifiée IPS, par exemple en ajoutant une ligne de propriété dans la mémoire à programmation unique PRPOTPM, ou en enregistrant des autorisations d'accès dans la mémoire sécurisée SECMEM.

La figure 7 illustre un exemple du deuxième mode de réalisation du circuit de gestion de la propriété MUOS correspondant, c'est-à-dire notamment apte à traiter des commandes de configuration communiquées sous la forme de certificats.

Comme dans le premier mode de réalisation décrit ci-avant en relation avec la figure 3, les commandes de configurations CmdConfig sont communiquées par un utilisateur USR via l'interface COMM et sont traitées par l'unité d'authentification QPU, notamment en matière d'authentification Auth et gestion des clés KS, KMng.

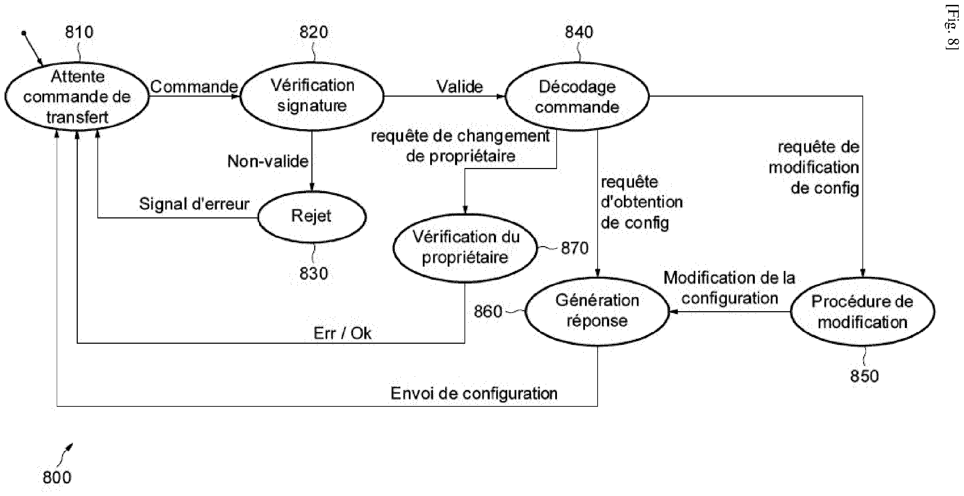

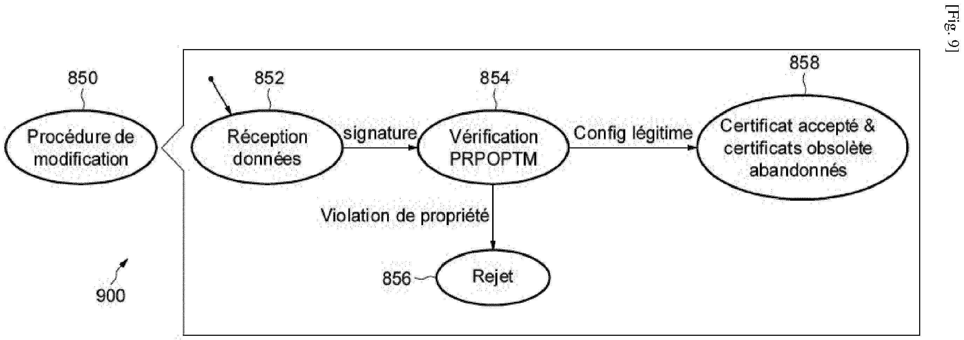

On se réfère aux figures 8 et 9 décrites ci-après concernant la mise en oeuvre de de la vérification par l'unité d'authentification QPU.

La figure 8 illustre un procédé 800 analogue au procédé 400 décrit précédemment en relation avec la figure 4.

En particulier, le procédé 800 comporte un état initial 810 sensiblement identique à l'état 410 du procédé 400 ; une étape de vérification de signature 820 et d'un éventuel rejet 830, sensiblement identiques à l'étape de 420 et au rejet 430 du procédé 400 ; une étape de décodage de commande 840 sensiblement identique à l'étape de 440 du procédé 400 ; une procédure de modification de la configuration 850 en cas de requête de modification de la configuration (on se référera à cet égard à la figure 9), une réponse contenant l'état actuel de la configuration générée dans une étape 860 sensiblement identique à l'étape de 460 du procédé 400.

En outre, une procédure d'inscription d'un propriétaire 870 dans le répertoire PRPOTPM, en cas de requête de changement de propriétaire. En effet, le deuxième mode de réalisation et de mise en oeuvre comprend une modification des propriétaires en interne dans le répertoire enregistré dans la mémoire à programmation unique PRPOTPM ; contrairement au premier mode de réalisation et de mise en oeuvre où le répertoire est communiqué dans chaque script.

La figure 9 illustre un exemple de procédé 900 pour mettre en oeuvre la procédure de modification de la configuration 850.

La procédure de modification de la configuration 850 comporte une vérification 854 que le propriétaire ayant signé les données reçues 852 (la chaine de données codant la commande) correspond bien au dernier propriétaire de la fonctionnalité identifiée, selon le contenu du répertoire PRPOTPM.

Si la signature ne correspond pas au dernier propriétaire connu, alors il y a violation de propriété et la requête de modification de la configuration de la commande est rejetée 856.

Si la signature correspond au dernier propriétaire connu, alors le certificat reçu est accepté, et les parties obsolète des anciens certificats sont abandonnées dans une étape 858 d'écriture en mémoire SECMEM.

On se réfère désormais aux figures 10 à 14 illustrant un exemple pratique des opérations du circuit de gestion de la propriété à plusieurs acteurs MUOS suivant le premier mode de réalisation et le deuxième mode de réalisation (les éléments appartenant exclusivement au deuxième mode de réalisation PRPOTPM, CRTF-CFG, sont tracés en trait interrompus).

Par exemple, dans le premier mode de réalisation et de mise en oeuvre, les scripts SCRPT sont exprimés en deux parties :
- un en-tête définissant les propriétés, c'est-à-dire le répertoire dans lequel les propriétaires des fonctionnalités sont répertoriés, et
- un script, ou « code programme », de configuration des fonctionnalités IPS, qui, lorsqu'il est exécuté par le circuit de contrôle CONT, détermine la configuration des fonctionnalités IPS du système sur puce SOC.

L'en-tête et le code programme contiennent des suites d'instructions, par exemple usuellement une instruction par ligne du script. Chaque ligne d'instruction étant signée, le circuit de contrôle est configuré pour s'assurer, au moment de l'exécution, que chaque instruction respecte les droits des différents acteurs.

Par exemple, un modèle de script avec un langage adapté à des commandes de configuration de base est exprimé ci-dessous. Les phrases notées entre /* et */ sont des commentaires expliquant la fonction de la ligne d'instruction correspondante.

```
       SCRPT
 SignST> ST OWN IPN /*l'acteur « ST » est le propriétaire de la
 fonctionnalité IPN*/
 SignST> User OWN IP1, IP2, IP3/*l'acteur « User » est le propriétaire
 des fonctionnalités IP1, IP2, IP3*/
 ----
 SignUser> ENABLE IP1, IP3 /*commande signée par l'acteur « User »
 activant les fonctionnalités IP1, IP3, c'est-à-dire donne l'autorisation
 au système d'accéder aux fonctionnalités IP1, IP3*/
 SignUser> FUSE IP1, IP2, IP3 /*commande signée par l'acteur
 « User » rendant irréversible la configuration des fonctionnalités IP1,
 IP2, IP3, c'est-à-dire IP1, IP3 activés et IP2 non-activée*/
 SignST> ENABLE IPN for 100 tick /*commande signée par l'acteur
 « ST » activant la fonctionnalité IPN pendant une durée de 100 cycles
 d'un signal « tick »*/
```

Chaque ligne d'instruction comporte :
- une signature « SignST> », « SignUser> », permettant de prouver que la commande est effectivement ajoutée par le propriétaire de la fonctionnalité configurée ;
- la commande, telle qu'une commande d'activation « ENABLE », de désactivation « DISABLE », d'irréversibilité de la configuration « FUSE », de définition d'une propriété « OWN » ;
- la liste de fonctionnalités IPS concernées ;
- optionnellement, une condition d'activation/désactivation peut être ajoutée, notamment une condition temporelle « for N tick ».

La condition temporelle déclenchera une alarme et sera exécutée lorsque le système d'horodatage toujours actif enverra un événement. En d'autres termes, l'allocation des droits de la fonctionnalité peut être programmée à un instant futur.

Par exemple, dans le deuxième mode de réalisation et de mise en oeuvre, le système MUOS pour effectuer de la configuration comporte deux parties :
- la mémoire à programmation unique PRPOTPM, c'est-à-dire le répertoire dans lequel les propriétaires des fonctionnalités sont répertoriés, et
- les certificats de configuration CRFT-CFG, qui déterminent comment les fonctionnalités du système sur puce SOC doivent être configurées pour les différents acteurs.

Le certificat étant signé, le circuit de contrôle CONT apte à exécuter en pratique la configuration, peut vérifier la validité du certificat.

Chaque certificat CRTF peut par exemple avoir la structure d'une ligne d'instruction décrite ci-avant, c'est-à-dire comportant :
- une signature ;
- la commande ;
- la liste de fonctionnalités IPS concernées ;
- optionnellement, une condition d'activation/désactivation.

La figure 10 illustre le cas d'une commande de changement de propriétaire pour les fonctionnalités IP1, IP2, IP3.

Dans cet exemple, l'acteur fabricant « ST » détient initialement la propriété de toutes les fonctionnalités IP1, IP2, IP3, IPN et en cède une partie (IP1-3) à un acteur « User ».

Dans le premier mode de réalisation, cela s'exprime dans l'en-tête du script :

```
       SCRPT
 SignST> ST OWN IPN
 SignST> User OWN IP1, IP2, IP3
```

Dans le deuxième mode de réalisation, cela s'exprime dans la mémoire à programmation unique :

```
       PRPOTPM
       PKst> 0b1111 /*chaque position de bit 1111 correspond respectivement
 aux fonctionnalités IPN, IP3, IP2, IP1*/
 PKuser > 0b0111 /*l'acteur User est propriétaire de IP3, IP2, IP1,
 l'ancien propriétaire « 1 » de IPN est inchangé*/
```

L'unité d'authentification QPU enregistre une nouvelle clé publique de l'acteur « User », notée PKuser.

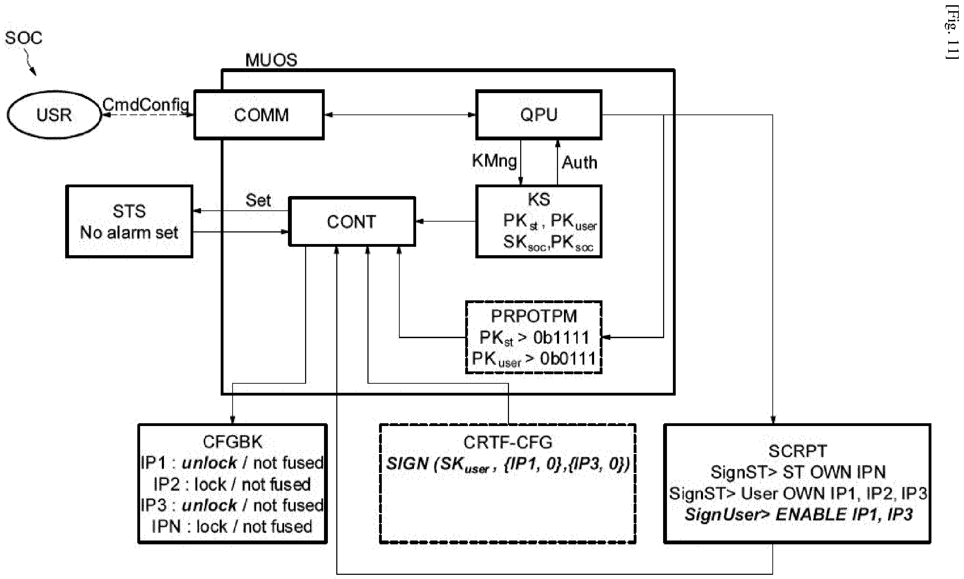

La figure 11 illustre le cas d'une commande de configuration, dans laquelle l'acteur User active les fonctionnalités IP1, IP3.

Dans le premier mode de réalisation, cela s'exprime dans le script SCRPT par l'instruction « SignUser> ENABLE IP1, IP3 »

Dans le deuxième mode de réalisation, cela s'exprime dans la partie de la mémoire sécurisé SECMEM contenant les certificats de configuration CRTF-CFG :
SIGN(SKuser, {IP1,0},{IP3,0}) /*un exemple d'expression du certificat correspondant, signé avec la clé secrète SKuser de l'acteur « User »*/

Cela est autorisé car l'acteur User est le propriétaire des fonctionnalités IP1, IP3 ; de sorte que les accès sont alloués aux fonctionnalités IP1, IP3 dans le registre de configuration CFGBK « IP1 : unlock », « IP3 : unlock ».

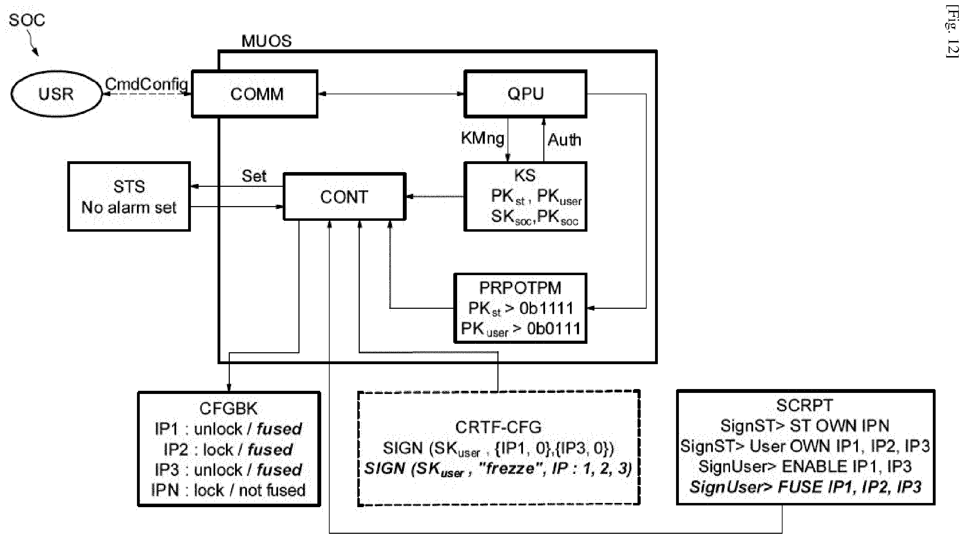

La figure 12 illustre le cas d'une commande de configuration, dans laquelle l'acteur User veut rendre irréversible la configuration actuelle des fonctionnalités IP1, IP2, IP3.

Dans le premier mode de réalisation, cela s'exprime dans le script SCRPT par l'instruction « SignUser> FUSE IP1, IP2, IP3 »

Dans le deuxième mode de réalisation, cela s'exprime dans les certificats de configuration CRTF-CFG :
SIGN(SKuser, "freeze", IP: 1,2,3) /*un exemple d'expression du certificat correspondant, signé avec la clé secrète SKuser de l'acteur « User »*/

Cela est autorisé car l'acteur User est le propriétaire des fonctionnalités IP1, IP3 ; de sorte que les accès sont alloués aux fonctionnalités IP1, IP3 dans le registre de configuration.

```
       CFGBK
 IP1: unlock / fused
 IP2: lock / fused
 IP3: unlock / fused
```

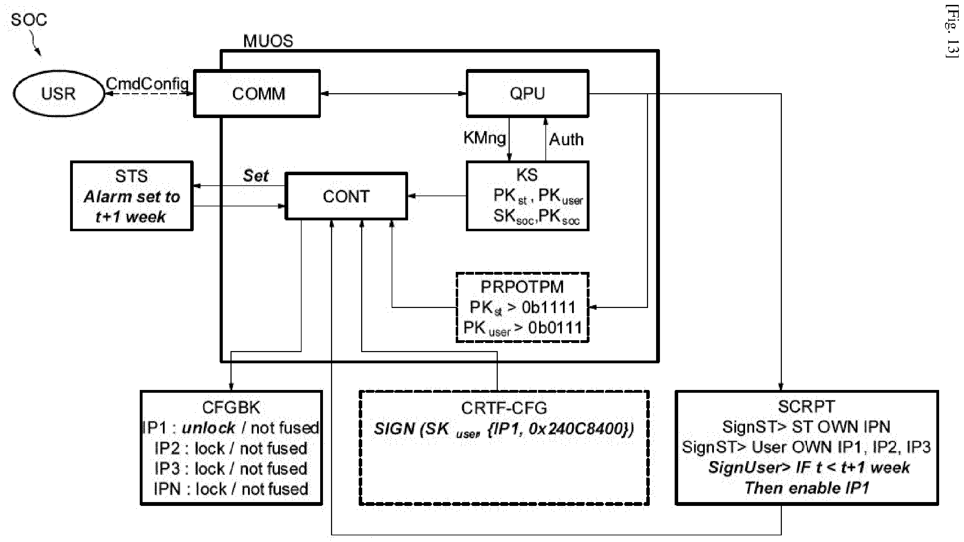

La figure 13 illustre le cas d'une commande de configuration, dans laquelle l'acteur User active la fonctionnalité IP1 pendant une durée limitée, par exemple d'une semaine.

Dans le premier mode de réalisation, cela s'exprime dans le script SCRPT par l'instruction « SignUser> IF t < t+1 week Then enable IP1 ».

Dans le deuxième mode de réalisation, cela s'exprime dans les certificats de configuration CRTF-CFG :
SIGN(SKuser, {IP1, 0x240C8400}) /*un exemple d'expression du certificat correspondant, signé avec la clé secrète SKuser de l'acteur « User »*/

Cela est autorisé car l'acteur User est le propriétaire de la fonctionnalité IP1 ; de sorte que les accès sont alloués à la fonctionnalité IP1 dans le registre de configuration CFGBK « IP1 : unlock ». En outre, un instant de réveil d'une alarme est programmé à une semaine après l'instant présent t, « Alarm set to t+1 week », dans le circuit sécurisé d'horodatage toujours actif STS.

La figure 14 illustre le cas de la figure 13, après expiration de la durée limitée d'activation de la fonctionnalité IP1 (par exemple une semaine plus tard), c'est-à-dire au moment où la fonctionnalité IP1 ne doit plus être activée.

A cet instant, l'alarme est générée et est communiqué comme une interruption au circuit de contrôle CONT, de manière à engendre une réallocation des accès, désormais non-autorisé, à la fonctionnalité IP1 dans le registre de configuration CFGBK « IP1 : lock ».

Il n'y a plus de réveil prévu dans le circuit sécurisé d'horodatage toujours actif STS « No alarm set » et les anciens certificats de configuration CRTF-CFG sont supprimés de la mémoire sécurisée SECMEM « None ».

Enfin, on remarquera que les exemple décrits ci-avant en relation avec les figures 1 à 14, pourront être réalisés, entièrement ou partiellement, de plusieurs façons possibles, par exemple : selon une configuration complètement matérielle, par un circuit « configuré en dur » du type machine d'état ; selon une configuration matérielle mais comportant un processeur caché configuré de façon logicielle ; selon une configuration hybride micrologicielle et matérielle du type « enclave sécurisée », ou selon une configuration entièrement logicielle, par exemple dans un environnement sécurisé d'un processeur « TEE » (acronyme des termes anglais « Trusted Execution Environement »)
En outre, quelle que soit la réalisation choisie, la mise en oeuvre des allocations des droits des fonctionnalités du système sur puce SOC fait avantageusement partie du processus de démarrage du système SOC. En outre, avantageusement également, ladite mise en oeuvre des allocations doit être exécutée pour permettre l'accès aux fonctionnalités protégées, de sorte que sinon les fonctionnalités ne sont pas accessibles et seule la partie commune du système sur puce SOC est disponible.

## Revendications

1. Procédé de gestion du cycle de vie (LCMS) d'un système sur puce (SOC) ayant des fonctionnalités (IPS), comprenant une gestion de la propriété à plusieurs acteurs (MUOS) répertoriant des propriétaires des fonctionnalités dans un répertoire, et comprenant une allocation des droits d'une fonctionnalité (IPS) au cours du cycle de vie du système sur puce, en fonction d'une commande de configuration (CmdConfig) comportant une identification de ladite fonctionnalité, une identification d'un droit de propriété ou d'accès de la fonctionnalité, et une signature du propriétaire de cette fonctionnalité (SignST>, SignUser>).

2. Procédé selon la revendication 1, dans lequel ledit répertoire est contenu dans un script de programmation (SCRPT) enregistré dans une mémoire sécurisée (SECMEM), et ladite commande de configuration (CmdConfig) est communiquée dans une version modifiée dudit script, le procédé comprenant une exécution (CONT) du script afin d'effectuer ladite allocation des droits de la fonctionnalité identifiée.

3. Procédé selon la revendication 1, dans lequel ledit répertoire est contenu dans une mémoire à programmation unique (PRPOTPM), et ladite commande de configuration (CmdConfig) est communiquée dans un certificat (CRTF-CFG) comportant une chaine de données et enregistré dans une mémoire sécurisée (SECMEM), le procédé comprenant une interprétation (CONT) du certificat afin d'effectuer ladite allocation des droits de la fonctionnalité identifiée.

4. Procédé selon l'une des revendications 1 à 3, dans lequel, si ladite commande de configuration (CmdConfig) comporte l'identification d'un droit d'accès, alors la gestion de la propriété comprend une allocation d'autorisations d'accès à la fonctionnalité identifiée.

5. Procédé selon l'une des revendications 1 à 4, dans lequel, si ladite commande de configuration (CmdConfig) comporte l'identification du droit de propriété de ladite fonctionnalité à un acteur identifié, alors la gestion de la propriété comprend une allocation à l'acteur identifié de la propriété de la fonctionnalité identifiée.

6. Procédé selon l'une des revendications 1 à 5, dans lequel ladite commande de configuration comprend un transfert de propriété de ladite fonctionnalité depuis le propriétaire de cette fonctionnalité vers un acteur identifié.

7. Procédé selon l'une des revendications 1 à 6, dans lequel ladite gestion de la propriété comprend une vérification que ladite signature de la commande de configuration (CmdConfig) authentifie le dernier propriétaire connu dans ledit répertoire pour la fonctionnalité identifiée.

8. Procédé selon l'une des revendications 1 à 7, dans lequel le système sur puce comporte en outre un système (RIF) autorisant et interdisant les accès aux fonctionnalités (IPS), en fonction du contenu d'un registre de configuration (CFGBK), ladite gestion de la propriété comprenant une programmation du registre de configuration (CFGBK) pour allouer lesdits droits de la fonctionnalité.

9. Procédé selon la revendication 8, comprenant un enregistrement irréversible (fused) d'un contenu du registre de configuration (CFGBK), si ladite commande de configuration définit en outre un caractère irréversible de l'allocation.

10. Procédé selon l'une des revendications 7 ou 8, dans lequel ladite allocation des droits des fonctionnalités est effectuée au démarrage du système sur puce (SOC), en coopération avec ledit système (RIF) autorisant et interdisant les accès aux fonctionnalités, de sorte que tous les accès sont interdits avant ladite allocation.

11. Procédé selon l'une des revendications 1 à 10, comportant en outre une génération toujours active d'un horodatage (STS), dans lequel ladite gestion de la propriété comprend une programmation à un instant futur (t+1 week), déterminé par ledit horodatage, de ladite allocation des droits de la fonctionnalité.

12. Système sur puce (SOC), ayant des fonctionnalités (IPS), et comprenant un dispositif de gestion du cycle de vie (LCMS) incorporant un circuit de gestion de la propriété à plusieurs acteurs (MUOS) configuré pour répertorier des propriétaires des fonctionnalités dans un répertoire, et pour allouer des droits d'une fonctionnalité (IPS) au cours du cycle de vie du système sur puce (SOC), en fonction d'une commande de configuration comportant une identification de ladite fonctionnalité (IP1-IPN), une identification d'un droit de propriété ou d'accès de la fonctionnalité, et une signature du propriétaire de cette fonctionnalité (SignST>, SignUser>).

13. Système sur puce selon la revendication 12, dans lequel ledit répertoire est contenu dans un script de programmation (SCRPT) enregistré dans une mémoire sécurisée (SECMEM), et ladite commande de configuration est communiquée dans une version modifiée dudit script (SCRPT), ledit circuit de gestion de la propriété (MUOS) comportant une unité de contrôle (CONT) configurée pour exécuter ledit script (SCRPT) afin d'effectuer ladite allocation des droits de la fonctionnalité identifiée (IP1, IPN).

14. Système sur puce selon la revendication 12, dans lequel ledit répertoire est contenu dans une mémoire à programmation unique (PRPOTPM), et ladite commande de configuration est communiquée dans un certificat (CRTF) comportant une chaine de données et enregistré dans une mémoire sécurisée (SECMEM), ledit circuit de gestion de la propriété (MUOS) comportant une unité de contrôle (CONT) configurée pour interpréter ledit certificat (CRTF) afin d'effectuer ladite allocation des droits de la fonctionnalité identifiée (IP1, IPN).

15. Système sur puce selon l'une des revendications 12 à 14, dans lequel, le circuit de gestion de la propriété (MUOS) est configuré pour allouer des autorisations d'accès à la fonctionnalité identifiée (IP1-IPN), si ladite commande de configuration comporte l'identification d'un droit d'accès.

16. Système sur puce selon l'une des revendications 12 à 15, dans lequel, le circuit de gestion de la propriété (MUOS) est configuré pour allouer à l'acteur identifié (A, B) la propriété (PRP) de la fonctionnalité identifiée (IP1-IPN), si ladite commande de configuration comporte l'identification du droit de propriété de ladite fonctionnalité à un acteur identifié (A, B).

17. Système sur puce selon l'une des revendications 12 à 16, dans lequel ledit circuit de gestion de la propriété (MUOS) comporte une unité d'authentification (QPU) configurée pour vérifier que ladite signature de la commande de configuration (PKA) authentifie le dernier propriétaire connu (A) dans ledit répertoire pour la fonctionnalité identifiée.

18. Système sur puce selon l'une des revendications 12 à 17, comportant en outre un système (RIF) configuré pour autoriser et interdire des accès aux fonctionnalités du système sur puce (SOC), en fonction du contenu d'un registre de configuration (CFGBK), ledit circuit de gestion de la propriété (MUOS) étant configuré pour programmer le registre de configuration (CFGBK) afin d'allouer lesdits droits de la fonctionnalité.

19. Système sur puce selon la revendication 18, dans lequel ledit registre de configuration (CFGBK) est capable d'enregistrer un contenu de manière irréversible (FUS), si ladite commande de configuration définit en outre un caractère irréversible de l'allocation.

20. Système sur puce selon l'une des revendications 18 ou 19, dans lequel le circuit de gestion de la propriété (MUOS) est configuré pour effectuer ladite allocation des droits des fonctionnalités au démarrage du système sur puce (SOC), en coopération avec ledit système configuré pour autoriser et interdire des accès aux fonctionnalités du système sur puce (SOC) de sorte que tous les accès sont interdits avant ladite allocation.

21. Système sur puce selon l'une des revendications 12 à 20, comportant en outre un circuit sécurisé d'horodatage toujours actif (STS), dans lequel ledit circuit de gestion de la propriété (MUOS) est configuré pour programmer à un instant futur (t+1 week), déterminé par ledit circuit d'horodatage (STS), ladite allocation des droits de ladite fonctionnalité.
